# EUROPÄISCHE PATENTSCHRIFT

(11) **EP 2 546 573 B1**
(45) Veröffentlichungstag und Bekanntmachung des Hinweises auf die Patenterteilung: **30.11.2016**
(21) Anmeldenummer: 12175717.3
(22) Anmeldetag: 10.07.2012
(51) Int. Cl.: F23C 3/00, F23L 15/04, F23M 9/10

(54) **Fahrzeugheizgerät**
Appareil de chauffage pour véhicule
Vehicle heating device

(30) Priorität: 12.07.2011 DE 102011079018
(43) Veröffentlichungstag der Anmeldung: 16.01.2013
(73) Patentinhaber: Eberspächer Climate Control Systems GmbH & Co. KG, 73730 Esslingen (DE)
(72) Erfinder: Collmer, Andreas, 73773 Aichwald (DE); Haefner, Michael, 70469 Stuttgart (DE)
(74) Vertreter: RLTG

(56) Entgegenhaltungen:
- CN-A- 102 080 874
- DE-A1- 2 718 215
- DE-A1- 3 341 490

## Beschreibung

Die vorliegende Erfindung betrifft ein Fahrzeugheizgerät, umfassend eine Brenneranordnung mit einem Verbrennungsabgase von einer Brennkammer weg führenden, in Richtung einer Längsachse langgestreckten Flammrohr sowie ein Wärmetauschergehäuse mit einer das Flammrohr umgebenden und damit einen im Wesentlichen ringartig um die Längsachse sich erstreckenden Abgasrückstromraum begrenzenden Umfangswandung und einem einem Abgasaustrittsendbereich des Flammrohrs gegenüber liegenden Bodenbereich, wobei in einem Auslassumfangsbereich des Wärmetauschergehäuses ein Abgasauslass zum Auslassen der Verbrennungsabgase aus dem Abgasrückströmraum vorgesehen ist.

Ein derartiges Fahrzeugheizgerät ist aus der DE 10 2005 001 662 A1 bekannt. Die am Austrittsendbereich des Flammrohrs aus diesem austretenden heißen Verbrennungsabgase werden durch den diesem Austrittsendbereich gegenüberliegenden Bodenbereich des Wärmetauscherkörpers bezüglich der Längsachse nach radial außen umgelenkt und treten in einem Einlassbereich, welcher zwischen einer Außenumfangsfläche des Flammrohrs in dessen Austrittsendbereich und der radial gegenüberliegenden Innenumfangsfläche der Umfangswandung des Wärmetauschergehäuses gebildet ist, in den Rückströmraum ein. In einem auf diesen Einlassbereich folgenden Erweiterungsbereich ist die Umfangswandung des Wärmetauschergehäuses stufenartig erweitert. Beginnend mit diesem Erweiterungsbereich sind an der dem Flammrohr zugewandten Innenseite des Wärmetauschergehäuses bzw. der Umfangswandung desselben Wärmeübertragungsrippen vorgesehen, um die in den Verbrennungsabgasen transportierte Wärme verstärkt auf die Umfangswandung zu übertragen. Im Bereich der stufenartigen Erweiterung der Umfangswandung des Wärmetauschergehäuses ist auch das Flammrohr stufenartig erweitert, wobei sowohl Flammrohr als auch Umfangswandung bezüglich der Längsachse im Wesentlichen rotationssymmetrisch ausgebildet sind, also in allen Umfangsbereichen die gleiche Umfangserweiterung erfahren bzw. den gleichen Radialabstand zur Längsachse aufweisen.

Die DE 199 26 264 A1 offenbart ein Fahrzeugheizgerät, bei welchem zur Vergleichmäßigung der Strömung der Verbrennungsabgase im Abgasrückströmraum der Bodenbereich des Wärmetauschergehäuses unsymmetrisch gestaltet ist. In einem dem Abgasauslass diametral gegenüberliegenden Bereich ist eine kalottenartige Auswölbung vorhanden, welche bewirken soll, dass die aus dem Flammrohr austretenden Verbrennungsabgase verstärkt oder bevorzugt in diesem Bereich in den Abgasrückströmraum einströmen und nicht notwendigerweise im Auslassumfangsbereich den kürzesten Strömungsweg nehmen.

Die DE 197 34 814 C1 offenbart ein Fahrzeugheizgerät, bei welchem, bedingt durch eine über den Umfang sich ändernde Höhe von an einer Innenseite des Wärmetauschergehäuses vorgesehenen Wärmeübertragungsrippen, das Flammrohr exzentrisch bezüglich der Umfangswandung des Wärmetauschergehäuses angeordnet ist. Somit wird in demjenigen Umfangsbereich, in welchem der Auslass vorgesehen ist, aufgrund des vorhandenen geringeren Radialabstands zwischen der Umfangswandung des Wärmetauschergehäuses und dem Flammrohr ein geringeres Volumen zur Durchströmung durch die Verbrennungsabgase bereitgestellt.

Das Dokument DE3341490 offenbart ein Fahrzeugheizgerät gemäss dem Oberbegriff des Anspruchs 1.

Es ist die Aufgabe der vorliegenden Erfindung, ein Fahrzeugheizgerät vorzusehen, bei welchem ein verbesserter Wärmeübertrag der in Verbrennungsabgasen transportierten Wärme auf ein Wärmetauschergehäuse erreicht wird.

Erfindungsgemäß wird diese Aufgabe gelöst durch ein Fahrzeugheizgerät, umfassend eine Brenneranordnung mit einem Verbrennungsabgase von einer Brennkammer weg führenden, in Richtung einer Längsachse langgestreckten Flammrohr sowie ein Wärmetauschergehäuse mit einer das Flammrohr umgebenden und damit einen im Wesentlichen ringartig um die Längsachse sich erstreckenden Abgasrückstromraum begrenzenden Umfangswandung und einem einem Abgasaustrittsendbereich des Flammrohrs gegenüber liegenden Bodenbereich, wobei in einem Auslassumfangsbereich des Wärmetauschergehäuses ein Abgasauslass zum Auslassen der Verbrennungsabgase aus dem Abgasrückströmraum vorgesehen ist.

Dabei ist weiter vorgesehen, dass in einem ersten Axialbereich des Abgasrückströmraums ein zwischen dem Flammrohr und der Umfangswandung bereitgestellter Strömungsquerschnitt im Auslassumfangsbereich kleiner ist als in einem dem Auslassumfangsbereich bezüglich der Längsachse gegenüberliegenden Umfangsbereich und der Strömungsquerschnitt im Auslassumfangsbereich in einem auf ersten Axialbereich folgenden Erweiterungsbereich zunimmt, wobei in Richtung auf den Abgasauslass zu in einem auf den Erweiterungsbereich folgenden zweiten Axialbereich der Strömungsquerschnitt im Auslassumfangsbereich im Wesentlichen dem Strömungsquerschnitt im gegenüberliegenden Umfangsbereich entspricht, oder/und wobei der Strömungsquerschnitt im Erweiterungsbereich stufenartig zunimmt.

Die vorliegende Erfindung berücksichtigt, dass das Strömungsverhalten der aus dem Flammrohr austretenden heißen Verbrennungsabgase nicht in allen Umfangsbereichen gleich ist. Grundsätzlich strömen die Verbrennungsabgase bevorzugt in demjenigen Bereich, in welchem der Abgasauslass mit dem geringsten Strömungswiderstand erreichbar ist. Dies ist im Allgemeinen derjenige Strömungsweg, in welchem auch der kürzeste Strömungsweg zwischen dem Austrittsendbereich des Flammrohrs und dem Abgasauslass vorhanden ist. Da bei dem erfindungsgemäßen Aufbau in demjenigen Umfangsbereich, in welchem sich der Abgasauslass befindet, der Strömungsquerschnitt kleiner ist, als in einem bezüglich der Längsachse gegenüberliegenden, in Umfangsrichtung also vom Abgasauslass am weitesten entfernt liegenden Umfangsbereich, im Auslassumfangsbereich also durch Vorsehen einer Drosselwirkung ein erhöhter Strömungswiderstand generiert ist, werden die Verbrennungsabgase auch verstärkt in Richtung zum gegenüberliegenden Umfangsbereich geleitet und dort in Richtung vom Austrittsendbereich weg auf den Abgasauslass zu strömen. Es wird somit eine gleichmäßigere Strömungsverteilung über den gesamten Umfang des Flammrohrs bzw. des ringartigen Abgasrückströmraums erreicht, so dass die Wärme in Umfangsrichtung gleichmäßiger verteilt auf das Wärmetauschergehäuse übertragen werden kann. Da folgend auf den ersten Axialbereich jedoch eine Erweiterung des Strömungsquerschnitts erfolgt, und zwar stufenartig bzw. derart, dass in einem dann folgenden zweiten Axialabschnitt an den beiden einander bezüglich der Längsachse diametral gegenüberliegenden Umfangsbereiche näherungsweise gleiche Strömungsverhältnisse bereitgestellt sind, kann insbesondere in dem auf den Erweiterungsbereich in Strömungsrichtung dann folgenden Längenabschnitt des Abgasrückströmraums über den Umfang verteilt eine näherungsweise gleichmäßige Wärmeübertragungscharakteristik erzielt werden.

Es sei darauf hingewiesen, dass im Sinne der vorliegenden Erfindung die Aussage, dass der Strömungsquerschnitt in bestimmten Umfangsbereichen eine bestimmte Größe aufweist, so zu verstehen ist, dass die pro Umfangseinheit zur Verfügung stehende Strömungsquerschnittsfläche für die Verbrennungsabgabe in bestimmter Weise eingestellt ist. Beispielsweise könnte eine derartige Umfangseinheit repräsentiert sein durch den Öffnungswinkel bzw. die Umfangserstreckung des Abgasauslasses bezüglich der Längsachse. Selbstverständlich könnte auch jede andere Umfangseinheit, beispielsweise gemessen in einem Winkel bezüglich der Längsachse, zum entsprechenden Vergleich herangezogen werden.

Um sicherzustellen, dass dort, wo der Strömungsweg zwischen dem Austrittsendbereich und dem Abgasauslass am kürzesten ist, grundsätzlich ein vergleichsweise hoher Strömungswiderstand vorgesehen ist und somit die Verberennungsabgase auch in andere Umfangsbereiche gezwungen werden, wird vorgeschlagen, dass der Strömungsquerschnitt im Auslassumfangsbereich bezüglich anderer Umfangsbereiche am kleinsten ist. Beispielsweise kann vorgesehen sein, dass der Strömungsquerschnitt repräsentiert ist durch einen radialen Abstand zwischen einer Außenumfangsfläche des Flammrohrs und einer Innenumfangsfläche der Umfangswandung. Im Zusammenhang mit der vorangehend angegebenen Definition des Strömungsquerschnitts wird hier ersichtlich, dass in vergleichbaren Winkelsegmenten des um die Längsachse ringartig sich erstreckenden Abgasrückströmraums der Strömungsquerschnitt dort geringer ist, wo der Radialabstand zwischen der Außenumfangsfläche des Flammrohrs und der Innenumfangsfläche der Umfangswandung am kleinsten ist, und dort bzw. in denjenigen Winkelsegmenten am größten ist, wo dieser Radialabstand am größten ist.

Eine weitere Vergleichmäßigung der Strömung in Umfangsrichtung kann dadurch erreicht werden, dass in einem zwischen dem Austrittsendbereich des Flammrohrs und der Umfangswandung gebildeten Rückströmraumeinlassbereich der Strömungsquerschnitt im Auslassumfangsbereich kleiner ist, als im gegenüberliegenden Umfangsbereich. In diesem Aufbau ist dafür gesorgt, dass zunächst bei Eintritt in den Abgasrückströmraum im Auslassumfangsbereich ein vergleichsweise großer Strömungswiderstand vorhanden ist, so dass de aus dem Flammrohr austretenden Verbrennungsabgase auch in andere Umfangsbereiche gezwungen werden. In in Strömungsrichtung dann folgenden, wesentlichen Längenbereichen des Abgasrückströmraums kann jedoch eine Vergleichmäßigung des Strömungsquerschnitts stattfinden, um dann in Umfangsrichtung gleichmäßige Strömungsverhältnisse erreichen zu können.

Dies kann beispielsweise dadurch erreicht werden, dass in dem Erweiterungsbereich ein Radialabstand zwischen einer Außenumfangsfläche des Flammrohrs und einer Innenumfangsfläche der Umfangswandung stufenartig zunimmt.

Eine in Umfangsrichtung symmetrische Ausgestaltung insbesondere in den dem Abgasauslass näher liegenden Bereichen kann dadurch dann erreicht werden, dass in Richtung auf den Abgasauslass zu auf den Erweiterungsbereich folgend der Radialabstand zwischen der Außenumfangsfläche des Flammrohrs und der Innenumfangsfläche der Umfangswandung in bezüglich der Längsachse einander gegenüberliegenden Bereichen im Wesentlichen gleich ist.

Um den Wärmeübertrag auf das Wärmetauschergehäuse weiter verbessern zu können, wird vorgeschlagen, dass an einer dem Flammrohr zugewandten Innenseite des Wärmetauschergehäuses vorzugsweise in axialer Richtung sich erstreckende Wärmeübertragungsrippen vorgesehen sind.

Unter Ausnutzung des Vorhandenseins derartiger Wärmeübertragungsrippen kann die Beeinflussung des Strömungsquerschnitts in verschiedenen Umfangsbereichen bei einer weiteren vorteilhaften Ausgestaltung dadurch erfolgen, dass in dem Axialbereich ein Umfangsabstand zwischen benachbarten Wärmeübertragungsrippen im Auslassumfangsbereich kleiner ist, als im gegenüberliegenden Umfangsbereich.

Um auch bei dieser Ausgestaltung in Richtung auf den Abgasauslass zu einander sich anpassende Strömungsverhältnisse erreichen zu können, wird vorgeschlagen, dass in dem Erweiterungsbereich der Umfangsabstand zwischen benachbarten Wärmeübertragungsrippen im Auslassumfangsbereich auf einen dem Umfangsabstand im gegenüberliegenden Umfangsbereich entsprechenden Umfangsabstand zunimmt.

Bei dieser Ausgestaltungsvariante ist der Strömungsquerschnitt also repräsentiert durch den Umfangsabstand zwischen benachbarten Wärmeübertragungsrippen, welcher einerseits durch die Geometrie der Rippen, also beispielsweise deren Dicke, die sich in Richtung der Längsachse verändern kann, beeinflusst werden kann, andererseits aber auch durch die Anzahl der Rippen beeinflusst werden kann. So könnte beispielsweise im Auslassumfangsbereich die Anzahl der z. B. mit gleicher Dicke vorgesehenen Rippen größer sein, als im gegenüberliegenden Umfangsbereich, was gleichermaßen - bezogen auf eine Umfangseinheit - zu einem geringeren Strömungsquerschnitt im Auslassumfangsbereich führt.

Es sei hier darauf hingewiesen, dass selbstverständlich auch die beiden vorangehend diskutierten Aspekte der Beeinflussung des Strömungsquerschnitts durch Veränderung bzw. Vorgabe des Radialabstands zwischen der Außenumfangsfläche des Flammrohrs und der Innenumfangsfläche der Umfangswandung und durch Beeinflussung des Umfangsabstands der Wärmeübertragungsrippen erreicht werden kann. Dies bedeutet letztendlich, dass der Strömungsquerschnitt dann sowohl durch Veränderung des Radialabstands als auch durch Veränderung des Umfangsabstands zwischen dem Auslassumfangsbereich und dem gegenüberliegenden Umfangsbereich variiert.

Zum Bereitstellen eines auch in Verbindung mit weiteren Baugruppen des Fahrzeugheizgeräts einfach zu realisierenden Aufbaus wird weiter vorgeschlagen, dass das Flammrohr und das Wärmetauschergehäuse zur Längsachse im Wesentlichen konzentrisch angeordnet sind.

Die vorliegende Erfindung wird nachfolgend mit Bezug auf die beiliegenden Figuren detailliert beschrieben. Es zeigt:
- Fig. 1: eine Längsschnittansicht eines Fahrzeugheizgeräts;
- Fig. 2: eine Querschnittansicht des Fahrzeugheizgeräts der Fig. 1, geschnitten längs einer Linie II-II in Fig. 1;
- Fig. 3: in ihren Darstellungen a) und b) Ansichten eines Wärmetauscherkörpers von radial innen in Blickrichtung IIIa in Blickrichtung IIIb.

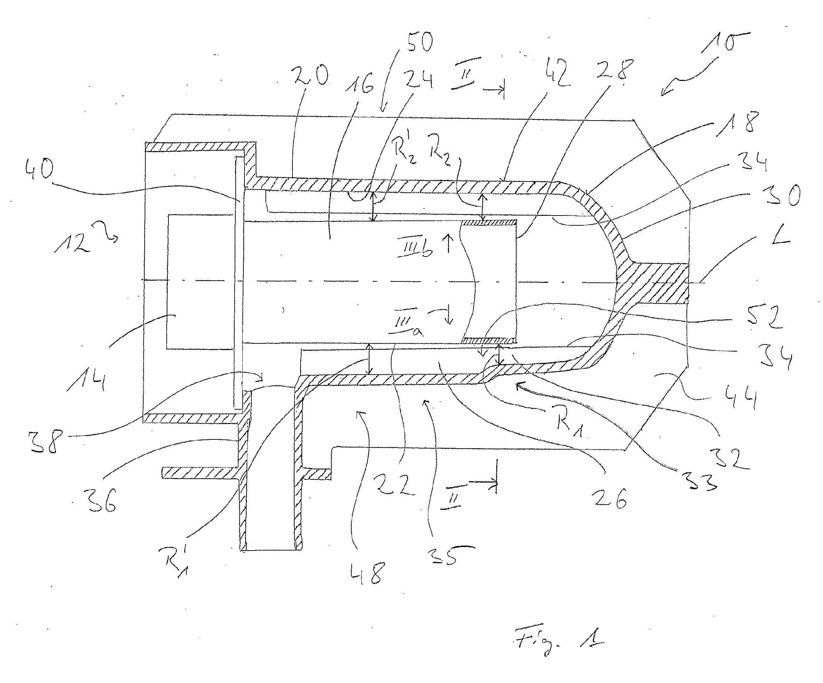

In Fig. 1 ist ein beispielsweise als Standheizung oder Zuheizer in einem Fahrzeug einsetzbares Fahrzeugheizgerät 10 im Längsschnitt geschnitten längs einer Längsachse L dargestellt. Das Fahrzeugheizgerät 10 umfasst einen Brennerbereich 12, beispielsweise Verdampferbrenner, welchem Brennstoff und Verbrennungsluft zugeführt und als Gemisch in einer Brennkammer 14 verbrannt werden. Die bei der Verbrennung entstehenden Verbrennungsabgase treten aus der Brennkammer 14 aus und gelangen in ein Flammrohr 16, welches beispielsweise eine im Wesentlichen zylindrische und in Richtung der Längsachse L langgestreckte Formgebung aufweist. Dabei kann beispielsweise die Längsachse L eine Mittenachse des Flammrohrs 16 definieren.

Ein allgemein mit 18 bezeichnetes Wärmetauschergehäuse umgibt mit einer Umfangswandung 20 das Flammrohr 16, so dass zwischen einer Außenumfangsfläche 22 des Flammrohrs 16 und einer Innenumfangsfläche 24 der Umfangswandung 20 bzw. des Wärmetauschergehäuses 18 ein um die Längsachse L sich allgemein ringartig erstreckender Abgasrückströmraum 26 gebildet ist.

Das Wärmetauschergehäuse 18 umfasst ferner einen an die Umfangswandung 20 anschließenden und einem Austrittsendbereich 28 des Flammrohrs 16 axial gegenüberliegenden Bodenbereich 30. Am Austrittsendbereich 28 ist das Flammrohr 16 beispielsweise axial offen, so dass die dort aus dem Flammrohr 16 austretenden Verbrennungsabgase in Richtung auf den Bodenbereich 30 zu strömen und dort nach radial außen umgelenkt werden. Die so umgelenkten Verbrennungsabgase gelangen zu einem zwischen der Außenumfangsfläche 22 am Austrittsendbereich 28 und der radial gegenüberliegenden Innenumfangsfläche 24 begrenzten Einlassbereich 32 des Abgasrückströmraums 26 und strömen, auch geleitet durch an einer Innenseite des Wärmetauschergehäuses 18 bzw. an der Innenumfangsfläche 24 der Umfangswandung 20 vorgesehene und beispielsweise in Richtung der Längsachse L sich erstreckende Wärmeübertragungsrippen 34 in Richtung auf einen im Bereich eines Auslassstutzens 36 gebildeten Abgasauslass 38 zu. Dieser ist in axialer Richtung nahe einer den Abgasrückströmraum 26 axial begrenzenden Abschlusswandung 40 vorgesehen.

Beim Strömen vom Einlassbereich 32 zum Auslass 38 übertragen die heißen Verbrennungsabgase Wärme auf die Wärmeübertragungsrippen 34 bzw. die Innenumfangsfläche 24 und auch den Bodenbereich 30 des Wärmetauschergehäuses 18. An dessen vom Flammrohr 16 abgewandt liegender Außenseite 42 können weitere Wärmeübertragungsrippen 44 vorgesehen sein, über deren Oberfläche die im Wärmetauschergehäuse 18 aufgenommene Wärme beispielsweise auf die in einen Fahrzeuginnenraum einzuleitende und das Wärmetauschergehäuse 18 beispielsweise in Richtung der Längsachse L umströmende Luft übertragen wird.

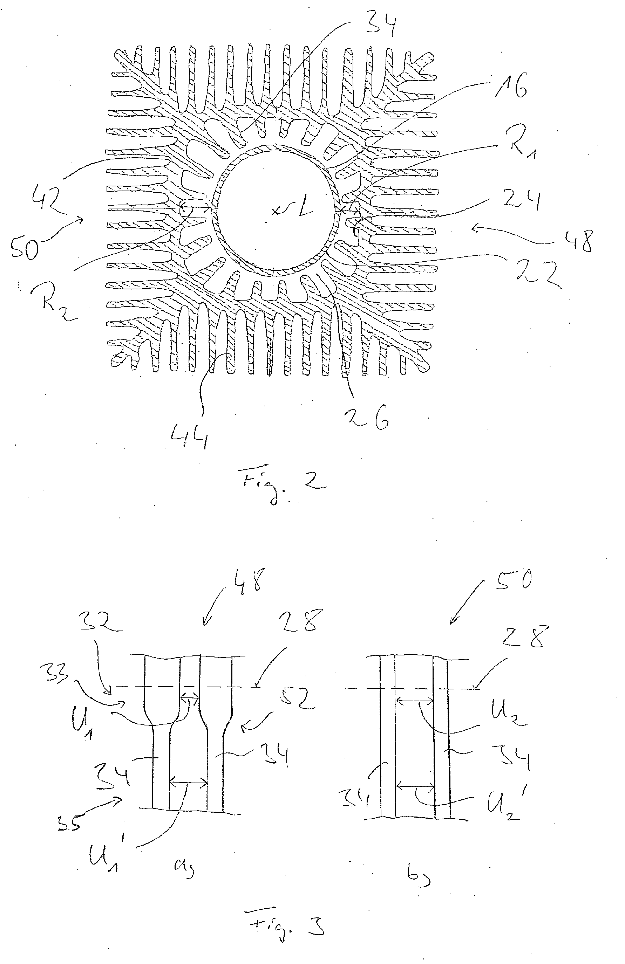

Man erkennt in den Darstellungen der Fig. 1 und 2, dass ein Radialabstand R₁ zwischen der Außenumfangsfläche 22 und der Innenumfangsfläche 24 in dem einen ersten Axialbereich 33 bereitstellenden Einlassbereich 32 des Abgasrückströmraums 26 und in einem Auslassumfangsbereich 48 kleiner ist, als ein entsprechender Radialabstand R₂ in einem dem Auslassumfangsbereich 48 bezüglich der Längsachse L diametral gegenüberliegenden Umfangsbereich 50. Der Auslassumfangsbereich 48 ist derjenige Umfangsbereich, in welchem der Auslass 38 bzw. der Auslassstutzen 36 am Wärmetauschergehäuse 18 vorgesehen ist und somit die Verbrennungsabgase nach dem Durchströmen des Abgasrückströmraums 26 aus diesem austreten. Die Folge dieser unterschiedlichen radialen Beabstandung ist, dass der Strömungsquerschnitt im Auslassumfangsbereich 48 kleiner ist, als im gegenüberliegenden Umfangsbereich 50.

Wie bereits eingangs dargestellt, kann der Strömungsquerschnitt hier bezogen sein auf eine beispielsweise als Winkelsegment definierte Umfangserstreckung des allgemein ringartig um die Längsachse L sich erstreckenden Abgasrückströmraums 26. Infolge dieses in Umfangsrichtung variierenden Strömungsquerschnitts bzw. Radialabstands zwischen der Außenumfangsfläche 22 und der Innenumfangsfläche 24 wird erreicht, dass die aus dem Austrittsendbereich 28 austretenden und am Bodenbereich 30 umgelenkten Strömungsabgase verstärkt auch im gegenüberliegenden Umfangsbereich 50 in den Einlassbereich 32 des Abgasrückströmraums 26 einströmen, da durch den geringeren Radialabstand R₁ im Auslassumfangsbereich 48 eine Drosselwirkung und somit ein erhöhter Strömungswiderstand gebildet sind. Dies bedeutet, dass zwangsweise die heißen Verbrennungsabgase nicht nur den kürzesten Strömungsweg zwischen dem Austrittsendbereich 28 und dem Auslass 38, nämlich die direkte Strömung im Auslassumfangsbereich 48 nehmen können, sondern eine gleichmäßigere Verteilung über den Umfang stattfinden kann. Zu diesem Zwecke kann beispielsweise vorgesehen sein, dass der Radialabstand R₁ im Auslassumfangsbereich 48 bezogen auf alle anderen Umfangsbereiche der geringste Radialabstand zwischen der Außenumfangsfläche 22 und der Innenumfangsfläche 24 ist. Je nach Ausgestaltung der Umfangswandung 20 kann dabei grundsätzlich zwischen dem Auslassumfangsbereich 48 und dem gegenüberliegenden Umfangsbereich 50 eine Variation des Radialabstands beispielsweise mit kontinuierlicher Zunahme vom Auslassumfangsbereich 48 zum gegenüberliegenden Umfangsbereich 50 erfolgen, wenn die Innenumfangsfläche 24 ebenso wie die Außenumfangsfläche 22 kreisringartig beschaffen ist. Bei der in Fig. 2 dargestellten, näherungsweise quadratischen Querschnittsgeometrie der Innenumfangsfläche 24 nimmt der Radialabstand zwischen dem Auslassumfangsbereich 48 und dem gegenüberliegenden Umfangsbereich 50 mehrfach zu und wieder ab. Auch hier ist jedoch der Radialabstand R₁ am Auslassumfangsbereich 48 kleiner als der Radialabstand R₂ am gegenüberliegenden Umfangsbereich 50 und auch kleiner als an allen anderen Umfangsbereichen. Es ist jedoch nicht notwendigerweise der Radialabstand R₂ am gegenüberliegenden Umfangsbereich 50 auch der größte Radialabstand zwischen der Außenumfangsfläche 22 und der Innenumfangsfläche 24.

Die Fig. 1 verdeutlicht weiter, dass in einem dem Einlassbereich 32 nahe liegenden Erweiterungsbereich 52 der Radialabstand zwischen der Außenumfangsfläche 22 und der Innenumfangsfläche 24 an einer stufenartigen Erweiterung der Umfangswandung 20 bezüglich der Längsachse L zunimmt. Diese Zunahme kann vorzugsweise derart sein, dass in einem auf den Erweiterungsbereich 52 dann folgenden zweiten Axialbereich 35 im Auslassumfangsbereich 48 ein Radialabstand R₁' vorliegt, der gleich dem im gleichen axialen Bereich vorhandenen Radialabstand R₂' im gegenüberliegenden Umfangsbereich 50 ist. Dies bedeutet, dass axial in Strömungsrichtung folgend auf den Erweiterungsbereich 52 die Radialabstände in allen einander bezüglich der Längsachse L diametral gegenüberliegenden Umfangsbereichen im Wesentlichen gleich sind, wobei gleichwohl die in Fig. 2 erkennbare Variation in Umfangsrichtung, bedingt durch die Geometrie der Umfangswandung 20 oder/und des Flammrohrs 16, vorhanden sein kann. Dabei kann axial in Strömungsrichtung folgend auf den Erweiterungsbereich 52 der Radialabstand in axialer Richtung näherungsweise konstant bleiben oder auch zunehmen.

Eine Variation, mit welcher auch eine Strömungsdrosselung im Auslassumfangsbereich 48 erreicht werden kann, ist in Fig. 3 in den Darstellungen a) und b) dargestellt. Dabei zeigt die Fig. 3a) Wärmeübertragungsrippen 34, welche im Auslassumfangsbereich 48 angeordnet sind, wohingegen die Fig. 3b) Wärmeübertragungsrippen 34 zeigt, die im gegenüberliegenden Umfangsbereich 50 angeordnet sind. Mit Strichlinie ist jeweils das axiale Ende des Flammrohrs 16, d. h. der Abgasaustrittsendbereich 28 desselben, eingezeichnet. Man erkennt, dass im Einlassbereich 32 des Abgasrückströmraums 26 bei den im Auslassumfangsbereich 48 positionierten Wärmeübertragungsrippen 34 der Umfangsabstand U₁ kleiner ist, als ein Umfangsabstand U₂, welcher im selben axialen Bereich bei den am gegenüberliegenden Umfangsbereich 50 vorgesehenen Wärmeübertragungsrippen 34 vorgesehen ist. Dies führt dazu, dass, wieder bezogen auf einen gewissen Umfangsbereich bzw. eine Umfangseinheit, der Strömungsquerschnitt im Auslassumfangsbereich 48 auch bei ggf. gleichem Radialabstand zwischen der Außenumfangsfläche 22 und der Innenumfangsfläche 24 kleiner ist, als im gegenüberliegenden Umfangsbereich.

Es ist hier darauf hinzuweisen, dass mit dem Ausdruck "Umfangsabstand" hier der tatsächlich zwischen den einander zugewandt liegenden Oberflächen der Wärmeübertragungsrippen 34 vorhandene Abstand gemeint ist. Der Umfangsabstand beispielsweise von Längsmittenlinien der einzelnen Wärmeübertragungsrippen 34 kann dabei über den gesamten Umfang verteilt gleich sein.

Man erkennt in Fig. 3, dass diese Variation des Umfangsabstands dadurch erreicht wird, dass die Wärmeübertragungsrippen 34 im Auslassumfangsbereich 48 in Umfangsrichtung breiter, also dicker sind, als die im gegenüberliegenden Umfangsbereich 50 vorgesehenen Wärmeübertragungsrippen 34. In einem in Strömungsrichtung dann folgenden Bereich kann in einem Erweiterungsbereich 52 die Dicke der im Auslassumfangsbereich 48 vorgesehenen Wärmeübertragungsrippen 34 abnehmen, so dass dort dann ein Umfangsabstand U₁' vorhanden ist, welcher dem an der gleichen axialen Position vorhandenen Umfangsabstand U₂' der im gegenüberliegenden Umfangsbereich 50 vorgesehenen Wärmeübertragungsrippen 34 entspricht. Dieser kann beispielsweise wieder dem Umfangsabstand U₂ entsprechen.

Es ist selbstverständlich, dass der in Fig. 3 dargestellte Variationsaspekt mit dem in den Fig. 1 und 2 dargestellten Aspekt der radialen Einschnürung kombiniert werden kann. Auch ist es selbstverständlich, dass die Umfangseinschnürung bzw. Drosselwirkung durch Variation der Anzahl der pro Umfangseinheit vorhandenen Wärmeübertragungsrippen 34 vorgesehen sein kann. So können beispielsweise Haupt-Wärmeübertragungsrippen mit über den gesamten Umfang gleichmäßigem Abstand und ggf. auch gleichmäßiger Dicke vorgesehen sein. Im Auslassumfangsbereich 48 können zwischen derartigen Hauptwärmeübertragungsrippen dann zusätzliche Einschnürungswärmeübertragungsrippen vorgesehen sein, welche das Volumen des Abgasrückströmraums 26 diesen Bereich begrenzen und somit auch den Strömungsquerschnitt verringern. Diese zusätzlichen Wärmeübertragungsrippen können dann in einem Erweiterungsbereich enden, so dass im dann folgenden axialen Strömungsbereich ebenso wie im gesamten gegenüberliegenden Umfangsbereich nur noch die Hauptwärmeübertragungsrippen vorhanden sind. Auch dieser Aspekt kann mit dem in den Fig. 2 und 2 dargestellten Aspekt oder auch dem in den Fig. 3a) und 3b) dargestellten Aspekt selbstverständlich kombiniert werden.

Unabhängig davon, wie die Einschnürung des Strömungsquerschnitts im Auslassumfangsbereich 48 erreicht wird, ist hier erkennbar, dass das Wärmetauschergehäuse 18 leicht unter Bereitstellung auch der erforderlichen Entformungsschrägen in einem Druckgussverfahren hergestellt werden kann.

Man erkennt insbesondere aus der Darstellung der Fig. 1, dass das Flammrohr 16 und das Wärmetauschergehäuse 18 bezüglich der Längsachse L im Wesentlichen konzentrisch angeordnet sind. Dem widerspricht nicht, dass am Auslassumfangsbereich 48 zum Bereitstellen der vorangehend diskutierten Strömungseinschnürung ggf. das Wärmetauschergehäuse 18 bzw. dessen Umfangswandung 20 etwas nach radial innen gerückt ist, um die in Fig. 1 erkennbare Einschnürung und axial darauf folgend die stufenartige Erweiterung im Erweiterungsbereich 52 bereitzustellen. Im in Strömungsrichtung auf den Erweiterungsbereich 52 dann folgenden Abschnitt liegt das dort in Umfangsrichtung beispielsweise symmetrisch, also ggf. spiegelsymmetrisch oder punktsymmetrisch bezüglich der Längsachse L ausgebildete Wärmetauschergehäuse 18 dann mit dem Flammrohr 16 konzentrisch zur Längsachse L, was einen leichten Anschluss an weitere Systembereiche, wie z. B. den Brennerbereich 12, ermöglicht.

## Patentansprüche

1. Fahrzeugheizgerät, umfassend eine Brenneranordnung (12) mit einem Verbrennungsabgase von einer Brennkammer (14) weg führenden, in Richtung einer Längsachse (L) langgestreckten Flammrohr (16) sowie ein Wärmetauschergehäuse (18) mit einer das Flammrohr (16) umgebenden und damit einen im Wesentlichen ringartig um die Längsachse (L) sich erstreckenden Abgasrückstromraum (26) begrenzenden Umfangswandung (20) und einem einem Abgasaustrittsendbereich (28) des Flammrohrs (16) gegenüber liegenden Bodenbereich (30), wobei in einem Auslassumfangsbereich (48) des Wärmetauschergehäuses (18) ein Abgasauslass (38) zum Auslassen der Verbrennungsabgase aus dem Abgasrückströmraum (26) vorgesehen ist,
**dadurch gekennzeichnet, dass** in einem ersten Axialbereich (33) des Abgasrückströmraums (26) ein zwischen dem Flammrohr (16) und der Umfangswandung (20) bereitgestellter Strömungsquerschnitt im Auslassumfangsbereich (48) kleiner ist als in einem dem Auslassumfangsbereich (48) bezüglich der Längsachse (L) gegenüberliegenden Umfangsbereich (50) und der Strömungsquerschnitt im Auslassumfangsbereich in einem auf ersten Axialbereich folgenden Erweiterungsbereich zunimmt,
- wobei in Richtung auf den Abgasauslass (38) zu in einem auf den Erweiterungsbereich (52) folgenden zweiten Axialbereich (35) der Strömungsquerschnitt im Auslassumfangsbereich (48) im Wesentlichen dem Strömungsquerschnitt im gegenüberliegenden Umfangsbereich (50) entspricht, oder/und
- wobei der Strömungsquerschnitt im Erweiterungsbereich (52) stufenartig zunimmt.

2. Fahrzeugheizgerät nach Anspruch 1,
**dadurch gekennzeichnet, dass** der Strömungsquerschnitt im Auslassumfangsbereich (48) bezüglich anderer Umfangsbereiche am kleinsten ist.

3. Fahrzeugheizgerät nach Anspruch 1 oder 2,
**dadurch gekennzeichnet, dass** der Strömungsquerschnitt repräsentiert ist durch einen radialen Abstand (R₁, R₂) zwischen einer Außenumfangsfläche (22) des Flammrohrs (16) und einer Innenumfangsfläche (24) der Umfangswandung (20).

4. Fahrzeugheizgerät nach einem der Ansprüche 1 bis 3,
**dadurch gekennzeichnet, dass** in einem zwischen dem Austrittsendbereich (28) des Flammrohrs (16) und der Umfangswandung (20) gebildeten Rückströmraumeinlassbereich (32) der Strömungsquerschnitt im Auslassumfangsbereich (48) kleiner ist, als im gegenüberliegenden Umfangsbereich (50).

5. Fahrzeugheizgerät nach Anspruch 4,
**dadurch gekennzeichnet, dass** in dem Erweiterungsbereich (52) ein Radialabstand (R₁) zwischen einer Außenumfangsfläche (22) des Flammrohrs (16) und einer Innenumfangsfläche (24) der Umfangswandung (20) stufenartig zunimmt.

6. Fahrzeugheizgerät nach Anspruch 5,
**dadurch gekennzeichnet, dass** in Richtung auf den Abgasauslass (38) zu auf den Erweiterungsbereich (52) folgend der Radialabstand (R₁', R₂') zwischen der Außenumfangsfläche (22) des Flammrohrs (16) und der Innenumfangsfläche (24) der Umfangswandung (20) in bezüglich der Längsachse (L) einander gegenüberliegenden Bereichen im Wesentlichen gleich ist.

7. Fahrzeugheizgerät nach einem der Ansprüche 1 bis 6,
**dadurch gekennzeichnet, dass** an einer dem Flammrohr (16) zugewandten Innenseite des Wärmetauschergehäuses (18) vorzugsweise in axialer Richtung sich erstreckende Wärmeübertragungsrippen (34) vorgesehen sind.

8. Fahrzeugheizgerät nach Anspruch 7,
**dadurch gekennzeichnet, dass** in dem ersten Axialbereich (33) ein Umfangsabstand (U₁, U₂) zwischen benachbarten Wärmeübertragungsrippen (34) im Auslassumfangsbereich (48) kleiner ist, als im gegenüberliegenden Umfangsbereich (50).

9. Fahrzeugheizgerät nach Anspruch 8,
**dadurch gekennzeichnet, dass** in dem Erweiterungsbereich (52) der Umfangsabstand zwischen benachbarten Wärmeübertragungsrippen (34) im Auslassumfangsbereich (48) auf einen dem Umfangsabstand (U₂') im gegenüberliegenden Umfangsbereich (50) entsprechenden Umfangsabstand (U₁') zunimmt.

10. Fahrzeugheizgerät nach Anspruch 8 oder 9,
**dadurch gekennzeichnet, dass** der Strömungsquerschnitt repräsentiert ist durch den Umfangsabstand (U₁, U₂) zwischen benachbarten Wärmeübertragungsrippen (34).

11. Fahrzeugheizgerät nach einem der Ansprüche 1 bis 10,
**dadurch gekennzeichnet, dass** das Flammrohr (16) und das Wärmetauschergehäuse (18) zur Längsachse (L) im Wesentlichen konzentrisch angeordnet sind.

## Claims

1. Vehicle heating device, comprising a burner arrangement (12) with an elongated flame tube (16) extending in the direction of a longitudinal axis (L), guiding exhaust gases away from a combustion chamber (14) as well as a heat exchanger housing (18) with a circumferential wall (20) surrounding the flame tube (16) and thus limiting an exhaust gas reflux space (26) extending substantially in an annular manner around the longitudinal axis (L) and with a bottom region (30) opposite an exhaust gas outlet end region (28) of the flame tube (16), wherein in an outlet circumferential region (48) of the heat exchanger housing (18) an exhaust gas outlet (38) is provided for discharging the combustion exhaust gases from the exhaust gas reflux space (26),
**characterized in that** in a first axial region (33) of the exhaust gas reflux space (26) a flow cross-section provided between the flame tube (16) and the circumferential wall (20) is smaller in the outlet circumferential region (48) than in a circumferential region (50) opposite the outlet circumferential region (48) in relation to the longitudinal axis (L) and **in that** the flow cross-section increases in the outlet circumferential region in an enlargement region adjacent to the first axial region,
- wherein in the direction towards the exhaust gas outlet (38) in a second axial region (35) adjacent to the enlargement region (52) the flow cross-section in the outlet circumferential region (48) substantially corresponds to the flow cross-section in the opposite circumferential region (50), or/and
- wherein the flow cross-section increases in a stepped manner in the enlargement region (52).

2. Vehicle heating device according to claim 1,
**characterized in that** the flow cross-section in the outlet circumferential region (48) is the smallest one when compared to other circumferential regions.

3. Vehicle heating device according to claim 1 or 2,
**characterized in that** the flow cross-section is represented by a radial distance (R₁, R₂) between an outer circumferential surface (22) of the flame tube (16) and an inner circumferential surface (24) of the circumferential wall (20).

4. Vehicle heating device according to one of claims 1 to 3,
**characterized in that** in a reflux space inlet region (32) formed between the outlet end region (28) of the flame tube (16) and the circumferential wall (20), the flow cross-section in the outlet circumferential region (48) is smaller than in the opposite circumferential region (50).

5. Vehicle heating device according to claim 4,
**characterized in that** in the enlargement region (52), a radial distance (R₁) between an outer circumferential surface (22) of the flame tube (16) and an inner circumferential surface (24) of the circumferential wall (20) increases step by step.

6. Vehicle heating device according to claim 5,
**characterized in that** in the direction towards the exhaust gas outlet (38) adjacent to the enlargement region (52), the radial distance (R₁', R₂') between the outer circumferential surface (22) of the flame tube (16) and the inner circumferential surface (24) of the circumferential wall (20) in opposite regions in relation to the longitudinal axis (L) is substantially the same.

7. Vehicle heating device according to one of claims 1 to 6,
**characterized in that** heat transfer ribs (34), preferably extending in the axial direction, are provided at an inner side of the heat exchanger housing (18) facing the flame tube (16).

8. Vehicle heating device according to claim 7,
**characterized in that** in the first axial region (33) a circumferential distance (U₁, U₂) between adjacent heat transfer ribs (34) in the outlet circumferential region (48) is smaller than in the opposite circumferential region (50).

9. Vehicle heating device according to claim 8,
**characterized in that** in the enlargement region (52) the circumferential distance between adjacent heat transfer ribs (34) in the outlet circumferential region (48) increases to a circumferential distance (U₁') corresponding to a circumferential distance (U₂') in the opposite circumferential region (50).

10. Vehicle heating device according to claim 8 or 9,
**characterized in that** the flow cross-section is represented by the circumferential distance (U₁, U₂) between adjacent heat transfer ribs (34).

11. Vehicle heating device according to one of claims 1 to 10,
**characterized in that** the flame tube (16) and the heat exchanger housing (18) are arranged substantially in a concentric manner in relation to the longitudinal axis (L).

## Revendications

1. Dispositif de chauffage pour un véhicule, comprenant un arrangement de brûleur (12) avec un tube foyer (16) allongé dans le sens d'un axe longitudinal (L) éloignant des gaz d'échappement de combustion de la chambre de combustion (14) et un boîtier d'échangeur de chaleur (18) avec une paroi circonférentielle (20) entourant le tube foyer (16) et limitant ainsi un espace de reflux de gaz d'échappement (26) s'étendant essentiellement sous forme annulaire autour de l'axe longitudinal (L) et avec une région de fond (30) opposée à une région de sortie de gaz d'échappement (28) du tube foyer (16), où dans une région circonférentielle de sortie (48) du boîtier d'échangeur de chaleur (18) une sortie de gaz d'échappement (38) est prévue pour faire évacuer les gaz d'échappement de combustion de l'espace de reflux de gaz d'échappement (26),
**caractérisé en ce que** dans une première région axiale (33) de l'espace de reflux de gaz d'échappement (26) une section transversale de flux prévue entre le tube foyer (16) et la paroi circonférentielle (20) et plus petite dans la région circonférentielle de sortie (48) que dans une région circonférentielle (50) opposée à la région circonférentielle de sortie (48) par rapport à l'axe longitudinal (L) et **en ce que** la section transversale de flux augmente dans la région circonférentielle de sortie dans une région d'expansion adjacente à la première région axiale,
- où dans le sens vers la sortie de gaz d'échappement (38) dans une deuxième région axiale (35) adjacente à la région d'expansion (52), la section transversale de flux dans la région circonférentielle de sortie (48) correspond essentiellement à la section transversale de flux dans la région circonférentielle (50) opposée, ou/et
- où la section transversale de flux augmente par étapes dans la région d'expansion (52).

2. Dispositif de chauffage pour un véhicule selon la revendication 1,
**caractérisé en ce que** la section transversale de flux dans la région circonférentielle de sortie (48) est la plus petite comparée aux autres régions circonférentielles.

3. Dispositif de chauffage pour un véhicule selon la revendication 1 ou 2,
**caractérisé en ce que** la section transversale de flux est représentée par une distance radiale (R₁, R₂) entre une surface circonférentielle extérieure (22) du tube foyer (16) et une surface circonférentielle intérieure (24) de la paroi circonférentielle (20).

4. Dispositif de chauffage pour un véhicule selon une des revendications 1 à 3,
**caractérisé en ce que** dans une région d'entrée d'espace de reflux (32) formée entre une région de sortie de gaz d'échappement (28) du tube foyer (16) et la paroi circonférentielle (20), la section transversale de flux dans la région circonférentielle de sortie (48) est plus petite que dans la région circonférentielle (50) opposée.

5. Dispositif de chauffage pour un véhicule selon la revendication 4,
**caractérisé en ce que** dans la région d'expansion (52) une distance radiale (R₁) entre une surface circonférentielle extérieure (22) du tube foyer (16) et une surface circonférentielle intérieure (24) de la paroi circonférentielle (20) augmente par étapes.

6. Dispositif de chauffage pour un véhicule selon la revendication 5,
**caractérisé en ce que** dans le sens vers la sortie de gaz d'échappement (38) suivant la région d'expansion (52) la distance radiale (R1', R2') entre la surface circonférentielle extérieure (22) du tube foyer (16) et la surface circonférentielle intérieure (24) de la paroi circonférentielle (20) dans des régions opposées par rapport à l'axe longitudinal (L) est essentiellement égale.

7. Dispositif de chauffage pour un véhicule selon une des revendications 1 à 6,
**caractérisé en ce que** des ailettes de transfert thermique (34) sont prévues à un côté intérieur du boîtier d'échangeur de chaleur (18) faisant face au tube foyer (16), s'étendant de préférence dans le sens axial.

8. Dispositif de chauffage pour un véhicule selon la revendication 7,
**caractérisé en ce que** dans la première région axiale (33) une distance circonférentielle (U₁, U₂) entre des ailettes de transfert thermique (34) adjacentes est plus petite dans la région circonférentielle de sortie (48) que dans la région circonférentielle (50) opposée.

9. Dispositif de chauffage pour un véhicule selon la revendication 8,
**caractérisé en ce que** dans la région d'expansion (52) la distance circonférentielle entre des ailettes de transfert thermique (34) adjacentes augmente dans la région circonférentielle de sortie (48) pour finalement atteindre une distance circonférentielle (U₁') qui correspond à la distance circonférentielle (U₂') dans la région circonférentielle (50) opposée.

10. Dispositif de chauffage pour un véhicule selon la revendication 8 ou 9,
**caractérisé en ce que** la section transversale de flux est représentée par la distance circonférentielle (U₁, U₂) entre des ailettes de transfert thermique (34) adjacentes.

11. Dispositif de chauffage pour un véhicule selon une des revendications 1 à 10,
**caractérisé en ce que** le tube foyer (16) et le boîtier d'échangeur de chaleur (18) sont arrangés de manière essentiellement concentrique par rapport à l'axe longitudinal (L).
